# EUROPÄISCHE PATENTSCHRIFT

(11) **EP 3 801 823 B1**
(45) Veröffentlichungstag und Bekanntmachung des Hinweises auf die Patenterteilung: **21.12.2022**
(21) Anmeldenummer: 19726356.9
(22) Anmeldetag: 20.05.2019
(51) Int. Cl.: B01D 46/00, B01D 46/24

(54) **FILTERVORRICHTUNG MIT DICHTUNG**
FILTER DEVICE WITH SEALING
DISPOSITIF FILTRANT AVEC JOINT

(30) Priorität: 04.06.2018 DE 102018208746
(43) Veröffentlichungstag der Anmeldung: 14.04.2021
(73) Patentinhaber: GLATT GMBH, 79589 Binzen (DE)
(72) Erfinder: THIES, Jochen, 79540 Lörrach (DE); KAPE, Adrian, 79618 Rheinfelden (DE); ZIMMERMANN, Dirk, 79664 Wehr (DE)
(74) Vertreter: Patentanwälte Magenbauer & Kollegen Partnerschaft mbB
(86) Internationale Anmeldenummer: PCT/EP2019/062947
(87) Internationale Veröffentlichungsnummer: WO 2019/233747

(56) Entgegenhaltungen:
- EP-A1- 3 101 244
- CN-A- 107 743 414
- DE-A1-102007 046 167
- DE-T5-112012 002 708

## Beschreibung

Die Erfindung betrifft eine an einer Prozessapparatur, insbesondere einem Granulier- oder Fluidisierungsapparat, anordenbare Filtervorrichtung zum Entstauben von Prozessluft der Prozessapparatur, mit einem einen Filterkorb umfassenden Filtergehäuse.

Filter umfassende Filtervorrichtungen sind in der Prozess- und Anlagentechnik seit langem Stand der Technik. Nachfolgend werden im Stand der Technik aufgezeigte Filtervorrichtungen kurz zusammengefasst:
Die deutsche Patentanmeldung DE 10 2007 046 167 A1 betrifft eine Luftfilterpatrone für eine Druckluftaufbereitungsanlage mit einer Trockenmittelbox mit Trockenmittel und einem die Trockenmittelbox umfassenden Behälter. Druckluftaufbereitungsanlagen werden beispielsweise in Nutzfahrzeugen eingesetzt, wo sie von einem Kompressor erzeugte Druckluft von Öl, Schmutz und Feuchtigkeit befreien. Die so aufbereitete Druckluft wird dann in geeigneter Weise auf verschiedene vorhandene Verbraucher verteilt. Die Aufbereitung der Druckluft ist notwendig, da die der Druckluftaufbereitungsanlage nachgeordneten Verbraucher ansonsten korrodieren und verschmutzen und schließlich eine deutlich reduzierte Lebensdauer aufweisen würden. Die Reinigungsfunktion wird dabei üblicherweise von einer austauschbaren Luftfilterpatrone, beispielsweise einer Filterpatrone mit OSC-Funktionalität ("Oil Separator Cartrige"), wahrgenommen, welche Vorrichtungen zum Abscheiden von Öl und Schmutz sowie dem Trocknen der Luft umfasst. Obwohl moderne Druckluftaufbereitungsanlagen eine Möglichkeit zur zumindest teilweisen Regeneration oder Spülung der Luftfilterpatrone durch Umkehrung der Luftströmung in einem Regenerationszyklus aufweisen, ist die Luftfilterpatrone ein Verschleißteil, welches regelmäßig ausgetauscht werden muss.

Die internationalen Patentanmeldung WO 2016 122 823 A1 bezieht sich auf eine Strömungskappe für eine Filteranordnung und eine Filteranordnung mit einer Strömungskappe, insbesondere auf eine Strömungskappe und eine Filteranordnung zur Abtrennung von Flüssigkeiten. Motoren können effektiver mit Kraftstoff betrieben werden, aus dem Verunreinigungen entfernt wurden, bevor der Kraftstoff in eine Brennkammer des Motors gelangt. Insbesondere Kraftstoffverunreinigungen, die nicht entfernt werden, können zu einem unerwünschten Betrieb des Motors führen und/oder den Verschleiß von Motorkomponenten erhöhen. Eine effektive Entfernung von Verunreinigungen aus dem Kraftstoffsystem eines Selbstzündungsmotors kann besonders wichtig sein.

Die Veröffentlichung der internationalen Anmeldung in deutscher Übersetzung DE 38 90 559 T5 offenbart einen Wirbelschichtbettgranulator zur Herstellung von Partikeln oder eines beschichteten Pulvers durch Besprühen eines Pulvers mit einem Bindemittelfluid für oder einen Beschichtungsfluid, während das Pulver in einer fluidisierten Wirbelschicht gehalten wird, und wobei zumindest ein Abschnitt des Gehäuses des Wirbelschichtbettgranulators durch eine als Filter ausgebildete poröse Membran gebildet wird. Nachteilig an der dargestellten technischen Lösung ist, dass bei der Prozessapparatur kein Filtergehäuse zum Schutz der porösen Membran ausgebildet ist. Darüber hinaus strömt gemäß der technischen Ausgestaltung die Prozessluft durch die zumindest einen Gehäuseteil ersetzende poröse Membran in die Umgebung, wodurch eine weitere Integration der austretenden Prozessluft nicht möglich ist.

Die Übersetzung der europäischen Patentschrift DE 697 26 691 T2 beschreibt eine Vorrichtung zur Granulierung von Pulver, umfassend einen verschließbaren Behälter, eine auf der Oberseite des Behälters angebrachte Sprühdüse, einen ersten Filter zur Bildung einer Pulverschicht, sowie eine untere Luftzufuhrkammer, wobei der erste Filter so angeordnet ist, dass zwischen dem ersten Filter und der Innenseite der Wand des Behälters ein Raum begrenzt wird, und dass Einrichtungen zur Abreinigung und Absaugung vorgesehen sind, um wahlweise eine Abreinigung oder eine Absaugung durch den ersten Filter durchzuführen, wobei der Raum zwischen dem ersten Filter und der Innenseite der Wand des Behälters in eine Mehrzahl von Zonen unterteilt ist, und wobei die Einrichtungen zur Abreinigung und Absaugung imstande sind, in einer Zone eine Abreinigung durch den ersten Filter durchzuführen, während sie in einer anderen Zone eine Absaugung durch den ersten Filter durchführen. Nachteilig an der gezeigten technischen Lösung ist, dass ein Austausch bzw. ein Wechsel des Filters bzw. der Filter einen hohen zeitlichen Aufwand erfordert.

Die europäische Patentschrift EP 1 905 507 zeigt eine Vorrichtung zum Behandeln von partikelförmigem Gut, mit einem Gehäuse, in dem eine Prozesskammer zum Aufnehmen des zu behandelnden Gutes vorhanden ist, die einen Boden aufweist, durch den Prozessluft in die Prozesskammer einführbar ist, und mit einem haubenartigen Gebilde, das sich bis zu einem oberen Endbereich des Gehäuses erstreckt und dort über eine Halterung fixiert ist, wobei das haubenartige Gebilde aus einem flexiblen, textilen Gewebe besteht, das für die Prozessluft durchlässig ist, die zu behandelnden Partikel des Gutes jedoch zurückbehält, und wobei die Prozesskammer im Innenraum des haubenartigen Gebildes ausgebildet ist, und wobei sich das haubenartige Gebilde, ausgehend vom umfänglichen Rand des Bodens und über dem Boden erhebt, und zumindest in seinem oberen Bereich mit Faltungen versehen ist. Der Nachteil der in der europäischen Patentschrift offenbarten technischen Lösung ist, dass der als haubenartiges Gebilde ausgebildete Filter fest und dicht mit einem umfänglichen Rand des Bodens verbunden ist, sodass ein Austausch bzw. ein Wechsel des Filters aufgrund einer komplett in seine Einzelteile zu zerlegenden Prozessapparatur einen hohen zeitlichen Aufwand erfordert.

Es ist daher die Aufgabe der vorliegenden Erfindung, eine Filtervorrichtung bereitzustellen, die neben dem Entstauben der Prozessluft einer Prozessapparatur, insbesondere einem Granulier- oder Fluidisierungsapparat, einen zeiteffizienten Austausch bzw. Wechsel des verbauten Filters möglich macht.

Diese Aufgabe wird bei einer an einer Prozessapparatur, bevorzugt einem Granulier- oder Fluidisierungsapparat, besonders bevorzugt einer Wirbelschichtanlage, angeordneten Filtervorrichtung der eingangs genannten Art dadurch gelöst, dass der Filterkorb einen aus einem flexiblen, textilen Gewebe bestehenden, haubenartigen Filter aufweist, der für Prozessluft durchlässig ist, die zu behandelnden Partikel des Gutes jedoch zurückbehält, und wobei der Filterkorb zwischen dem Filtergehäuse und dem Filter angeordnet ist und der Filterkorb und der Filter direkt oder indirekt am Filtergehäuse befestigbar oder befestigt sind, wobei der Filterkorb einen Filterkorbring aufweist und im Betriebszustand der Prozessapparatur der Filter in seinem unteren Bereich über seinen gesamten Umfang mit dem Filterkorbring des Filterkorbs im Wesentlichen staubdicht verbunden ist und, dass die Filtervorrichtung einen Dichtmechanismus mit einem im unteren Bereich des Filtergehäuses an diesem angeordneten Dichtelement umfasst, wobei das Dichtelement im Betriebszustand der Prozessapparatur mit dem Filtergehäuse, dem Filterkorbring und der Prozessapparatur derart zusammenwirkt, dass zwischen dem Filtergehäuse, dem Filterkorbring und der Prozessapparatur eine Dichtung erzeugbar ist oder erzeugt wird, sodass mittels des Dichtmechanismus und des Filters das Filtergehäuse in eine die zu behandelnden Partikel umfassende Prozesskammer und eine die entstaubte Prozessluft aufnehmende Reinluftkammer unterteilt ist.

Die erfindungsgemäße Filtervorrichtung weist gegenüber herkömmlichen Filtervorrichtungen den Vorteil auf, dass der aus einem flexiblen, textilen Gewebe bestehende, haubenartige Filter sehr einfach und schnell austauschbar ist, sodass ein auf der Prozessapparatur durchgeführter Herstellungs- und/oder Coatingprozess für Partikel nur für eine kurze Zeit unterbrochen werden muss. Hierdurch wird gerade bei zeitintensiven Herstellungs- oder Coatingprozessen eine höhere Produktionskapazität erreicht. Zusätzlich wird durch einen einfachen und schnellen Filteraustausch bzw. -wechsel die Möglichkeit geschaffen, auf der Prozessapparatur einen Produktwechsel hin zu einem anderen Herstellungs- und/oder Coatingprozess erleichtert.

Die erfindungsgemäße Filtervorrichtung weist aufgrund der großen Filtereintrittsfläche (Querschnittsfläche an der Verbindungsstelle zwischen Filtervorrichtung und Prozessapparatur), die zumindest im Wesentlichen der Austrittsfläche der Prozessapparatur entspricht, gleichzeitig eine kleine produktberührte Oberfläche auf. Somit ist eine Effizienzsteigerung der Prozessapparatur, bevorzugt eines Granulier- oder Fluidisierungsapparates, ganz besonders bevorzugt einer Wirbelschichtanlage, aufgrund einer geringeren Anlagerung von Partikeln an der produktberührten Oberfläche der Filtervorrichtung möglich.

Zudem ist die erfindungsgemäße Filtervorrichtung mit einer erfindungsgemäß ausgebildeten Filterbeschaffenheit (z.B. der Filtergeometrie oder dgl.) für alle Baugrößen von Prozessapparaturen, bevorzugt von Granulier- oder Fluidisierungsapparaten, geeignet.

Des Weiteren wird durch die erfindungsgemäße Filtervorrichtung verhindert, dass die behandelten Partikel während des Herstellungs- und/oder Coatingprozesses gegen die Unterseite von bisher eingesetzten Filtern, wie beispielsweise Ausblasfiltern, geschleudert werden. Darüber hinaus besteht durch die erfindungsgemäße Filtervorrichtung die Möglichkeit den Volumenstrom an Prozessluft in der Anlage zu erhöhen, wodurch sich die Verweilzeit der zu behandelnden Partikel ggf. deutlich reduziert. Aufgrund des möglichen höheren Volumenstroms an Prozessluft in der Anlage wird die verbesserte Behandlung, insbesondere die Trocknung, der von der Prozessluft umspülten Partikel erreicht, wodurch sich die Tendenz der Partikel zur Agglomeration reduziert. Somit wird durch diese Maßnahme eine effizientere Prozessführung erzielt.

Gemäß einer weiteren vorteilhaften Ausgestaltung der erfindungsgemäßen Filtervorrichtung ist das Dichtelement in einer Nut angeordnet. Durch die Nut wird das Dichtelement des Dichtmechanismus in seiner Position gehalten bzw. geführt, sodass stets eine optimale Dichtung zwischen den abzudichtenden Bauteilen erzielt wird. Bevorzugt ist die Nut eine geteilte Nut. Besonders bevorzugt wird die geteilte Nut durch das Filtergehäuse und den Filterkorbring ausgebildet. Ganz besonders bevorzugt weist das Filtergehäuse eine erste Flanke, einen Nutgrund sowie einen ersten Teil einer zweiten Flanke der geteilten Nut und der Filterkorbring einen zweiten Teil der zweiten Flanke der geteilten Nut auf. Der Vorteil einer geteilten Nut ist, dass eine verbesserte Dichtung zwischen Filtergehäuse und Filterkorbring in der geteilten Nut durch das dort angeordnete Dichtelement erzielt wird, da die einzelnen Bauteile beim Zusammenbau der Filtervorrichtung immer an der gleichen Position angeordnet sind.

Vorteilhafterweise ist der Filterkorbring des Filterkorbs zumindest im Wesentlichen in Form einer Platte ausgebildet. Vorteilhafterweise wird hierdurch der Filterkorb in seinem unteren Bereich stabilisiert.

Nach einer zusätzlichen vorteilhaften Ausgestaltung der erfindungsgemäßen Filtervorrichtung ist das Dichtelement im Bereich einer Zarge im unteren Bereich des Filtergehäuses angeordnet. Durch die Anordnung des Dichtelements im Bereich der Zarge im unteren Bereich des Filtergehäuses wird sichergestellt, dass die Filtervorrichtung eine ausreichend große, insbesondere eine maximal große, Filterfläche aufweist.

Bevorzugt ist das Dichtelement des Dichtmechanismus als aufblasbares Dichtelement ausgebildet. Zudem ist oder wird die Dichtung bevorzugt durch Aufblasen des Dichtelements erzeugbar oder erzeugt. Ein aufblasbares Dichtelement gestattet es die geteilte Nut, die durch das Filtergehäuse und den Filterkorbring des Filterkorbs ausgebildet wird, optimal abzudichten und gleichzeitig das Filtergehäuse gegenüber dem Prozessapparat abzudichten, sodass mittels des Dichtmechanismus und des Filters das Filtergehäuse in eine die zu behandelnden Partikel umfassende Prozesskammer und eine die entstaubte Prozessluft aufnehmende Reinluftkammer unterteilt wird.

Ein weiterer Vorteil der erfinderfindungsgemäßen Filtervorrichtung ist, dass der Filter in seinem unteren Bereich über seinen gesamten Umfang mit dem Filterkorbring des Filterkorbs lösbar verbunden ist. Diesbezüglich bevorzugt ist die Verbindung zwischen dem Filter in seinem unteren Bereich über seinen gesamten Umfang mit dem Filterkorbring des Filterkorbs eine Klips- oder Reißverschlussverbindung. Ganz besonders bevorzugt ist die Verbindung zwischen dem Filter in seinem unteren Bereich über seinen gesamten Umfang mit dem Filterkorbring des Filterkorbs zumindest im Wesentlichen staubdicht. Hierdurch wird zusätzlich verhindert, dass zu behandelnde Partikel von der Prozesskammer in die Reinluftkammer gelangen.

Vorteilhafterweise ist der Filterkorb mittels einer im Filtergehäuse angeordneten, Befestigungselemente, insbesondere Magnete, umfassenden Befestigungsvorrichtung am Filtergehäuse befestigbar oder befestigt. Durch die Befestigungselemente aufweisende Befestigungsvorrichtung wird sichergestellt, dass der Filterkorb schnell und einfach im Filtergehäuse angeordnet bzw. befestigt werden kann, wodurch der Austausch des Filters vereinfacht wird. Zudem wird durch die Befestigungsvorrichtung erreicht, dass der Filterkorb stets gleich im Filtergehäuse der Filtervorrichtung positioniert ist.

Darüber hinaus ist der Filter bevorzugt mittels einer Aufhängevorrichtung am Filtergehäuse oder am Filterkorb befestigbar oder befestigt. Durch die Aufhängevorrichtung ist es möglich den Filter schnell auszutauschen bzw. zu wechseln und einen neuen Filter darüber hinaus zusätzlich in der gleichen Position am Filtergehäuse oder am Filterkorb zu befestigen. Hierdurch wird ein Wechsel auf einen anderen Herstellungs- und/oder Coatingprozess deutlich vereinfacht.

Bevorzugt weist die Filtervorrichtung eine eine Düse umfassende Ausblasvorrichtung auf, über die die Außenseite des Filters mit Blasluft beaufschlagbar ist. Besonders bevorzugt ist die Ausblasvorrichtung durch Düsen umfassende Rohre ausgebildet, die besonders bevorzugt zumindest einen Teil des Filters umschließen. Ganz besonders bevorzugt umschließen die Düsen umfassenden Rohre den Filter zumindest im Wesentlichen um 90° bzw. 180°. Durch die mindestens eine Düse wird der Filter von außen mit Blasluft beaufschlagt, sodass der Filter abgereinigt wird, wodurch ein kontinuierlicher Betrieb, zumindest jedoch ein längerer Betrieb als herkömmlich gewährleistet werden kann. Eine Ausbildung der Ausblasvorrichtung in Form von Düsen umfassenden Rohren ist in der Herstellung besonders kostengünstig.

Nach einer zusätzlichen vorteilhaften Ausgestaltung der erfindungsgemäßen Filtervorrichtung sind Stege im Filtergehäuse angeordnet, die das Filtergehäuse in Ausblasbereiche segmentieren. Die im Filtergehäuse angeordneten Stege führen die Ausblasluft gezielt auf einen Bereich des Filters und verhindern dadurch eine unzureichende Abreinigung des in der Filtervorrichtung angeordneten Filters. Überdies ist bevorzugt der Filter selbst durch Versteifungselemente, wie beispielsweise durch verstärkte Nähte oder dergleichen, in Filtersegmente unterteilt. Hierdurch wird eine unzureichende Abreinigung des in der Filtervorrichtung angeordneten Filters ebenfalls verbessert.

Nachfolgend wird die Erfindung anhand der beiliegenden Zeichnung näher erläutert. Es zeigen
- Figur 1: eine Seitenansicht einer an einer Prozessapparatur angeordneten erfindungsgemäßen Filtervorrichtung im Halbschnitt,
- Figur 2: eine perspektivische Darstellung der in Fig. 1 gezeigten an einer Prozessapparatur angeordneten erfindungsgemäßen Filtervorrichtung im Teilschnitt,
- Figur 3: eine Detailansicht einer exemplarischen Befestigungsvorrichtung des Filterkorbs am Filtergehäuse sowie einer exemplarischen Aufhängevorrichtung des Filters am Filterkorb gemäß dem in Fig. 2 gezeigten Ausschnitt Y,
- Figur 4: eine Detailansicht des Dichtmechanismus mit aufblasbarem Dichtelement der erfindungsgemäßen Filtervorrichtung zwischen Filtergehäuse, Filterkorbring und Prozessapparatur gemäß dem in Fig. 2 dargestellten Ausschnitt Z einer sich nicht im Betriebszustand befindenden Prozessapparatur und
- Figur 5: eine Detailansicht des Dichtmechanismus mit aufblasbarem Dichtelement der erfindungsgemäßen Filtervorrichtung zwischen Filtergehäuse, Filterkorbring und Prozessapparatur gemäß dem in Fig. 2 dargestellten Ausschnitt Z einer sich im Betriebszustand befindenden Prozessapparatur.

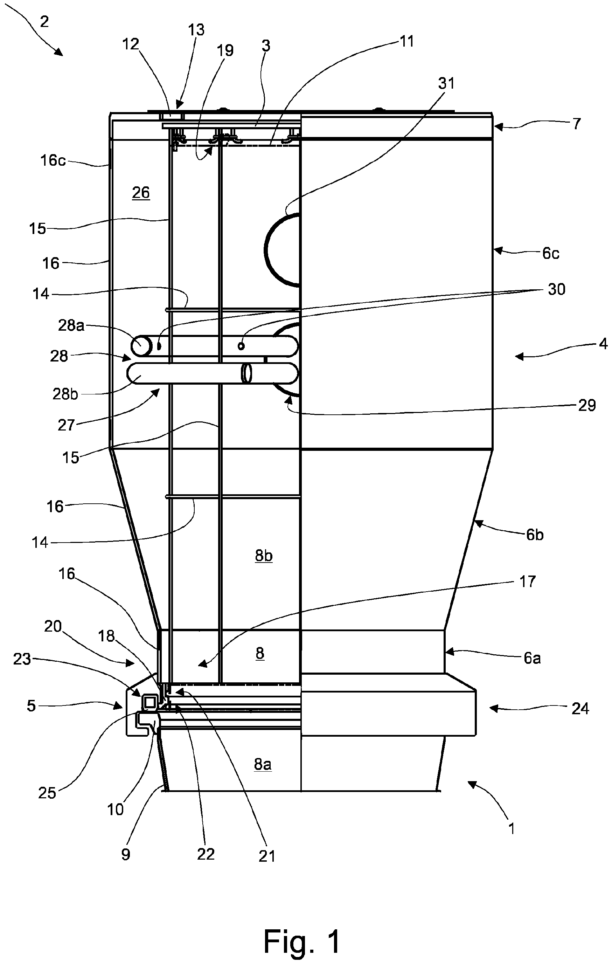

In der Fig. 1 wird eine Seitenansicht einer an einer Prozessapparatur 1 angeordneten erfindungsgemäßen Filtervorrichtung 2 im Halbschnitt gezeigt. Die erfindungsgemäße Filtervorrichtung 2 ist bevorzugt an der Prozessapparatur 1, insbesondere einem Granulier- oder Fluidisierungsapparat, zum Entstauben von Prozessluft der Prozessapparatur 1 angeordnet. Die Filtervorrichtung 2 weist ein einen Filterkorb 3 umfassendes Filtergehäuse 4 auf. Das Filtergehäuse 4 umfasst eine Zarge 5, insbesondere eine C-förmig ausgebildete Zarge, sowie einen an der Zarge 5 anschließenden ersten vertikalen Filtergehäuseabschnitt 6a, einen zweiten konischen Filtergehäuseabschnitt 6b, einen dritten vertikalen Filtergehäuseabschnitt 6c sowie einen Filtergehäusedeckel 7, beispielsweise in Form eines Klöpperbodens oder dergleichen.

Die Prozessapparatur 1 umfasst im Ausführungsbeispiel eine konisch ausgebildete einen ersten Teil 8a einer Prozesskammer 8 umschließende Prozessapparaturwand 9 sowie einen mit der Zarge 5 des Filtergehäuses 4 zusammenwirkenden Flansch 10.

Der Filterkorb 3 der erfindungsgemäßen Filtervorrichtung 2 weist einen aus einem flexiblen, textilen Gewebe bestehenden, haubenartigen Filter 11 auf. Der haubenartige Filter 11 ist für Prozessluft durchlässig, hält jedoch die zu behandelnden Partikel des Gutes zurück. Als Prozessluft wird hierbei ein gasförmiges Medium bezeichnet, das über einen hier nicht gezeigten Anströmboden der Prozessapparatur 1 in den ersten Teil 8a der Prozesskammer 8 einströmt. Vorzugsweise fluidisiert die Prozessluft in dem ersten Teil 8a der Prozesskammer 8 aufgenommene Partikel zu deren Behandlung, wie bspw. zur Trocknung oder zur Beschichtung in einem Coatingprozess.

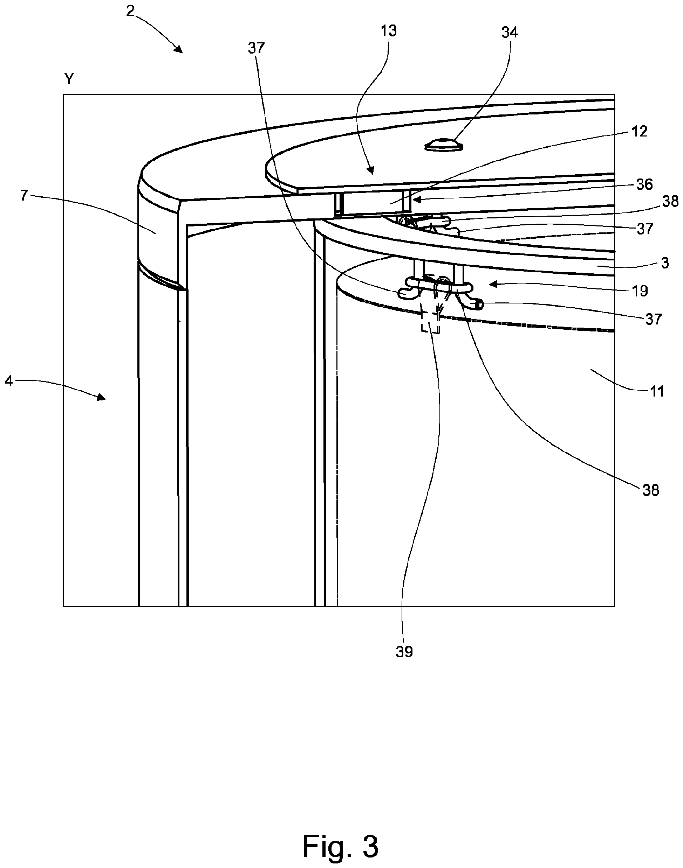

Zwischen dem Filter 11 und dem Filtergehäuse 4 ist vorzugsweise der Filterkorb 3 angeordnet. Der Filterkorb 3 ist direkt oder indirekt am Filtergehäuse 4 befestigbar. Bevorzugt wird der Filterkorb 3 direkt am Filtergehäuse 4 befestigt. Im Ausführungsbeispiel wird der Filterkorb 3 mittels einer im Filtergehäusedeckel 7 des Filtergehäuses 4 angeordneten, Befestigungselemente 12, insbesondere Magnete, umfassenden Befestigungsvorrichtung 13 am Filtergehäusedeckel 7 direkt befestigt. Aufgrund der die Befestigungselemente 12 aufweisenden Befestigungsvorrichtung 13 ist der Filterkorb 3 sehr einfach am Filtergehäuse 4 befestigbar angeordnet, sodass der Filterkorb 3 sehr schnell austausch- bzw. auswechselbar ist. Zudem wird durch die Befestigungsvorrichtung 13 erreicht, dass der Filterkorb 3 stets gleich im Filtergehäuse 4 der Filtervorrichtung 2 positioniert ist. Eine Ausführungsform der auf Befestigungsvorrichtung 13 ist detailliert in Fig. 3 gezeigt.

Darüber hinaus weist der Filterkorb 3 horizontale Streben 14 und vertikale Streben 15 auf. Aufgrund der horizontalen und vertikalen Streben 14, 15 ist der Filterkorb 3 gitterähnlich ausgebildet. Der gitterähnlich ausgebildete Filterkorb 3 verhindert, dass der Filter 11 im Betriebszustand der Prozessapparatur 1 durch die den Filter 11 aufblasende Prozessluft gegen eine Filtergehäusewand 16 gedrückt wird, wodurch der Filter am Filtergehäuse anhaften würde und der Herstellungs- und/oder Coatingprozess aufgrund der fehlenden Filterwirkung des Filters 11 unterbrochen wird.

Der Filterkorb 3 weist im Ausführungsbeispiel zudem in seinem unteren Bereich 17 einen Filterkorbring 18 auf. Als unterer Bereich 17 wird das untere Drittel des Filterkorbs 3 definiert. Der Filterkorbring 18 muss nicht den gesamten unteren Bereich 17 einnehmen. Der Filterkorbring 18 kann beispielsweise als horizontale Strebe 14 ausgebildet sein oder ist, wie im Ausführungsbeispiel dargestellt, zumindest im Wesentlichen in Form einer Platte ausgebildet.

Der aus einem flexiblen, textilen Gewebe bestehende, haubenartige Filter 11 ist im Ausführungsbeispiel mittels einer Aufhängevorrichtung 19 am Filterkorb 3 und somit indirekt am Filtergehäuse 4 angeordnet. Eine Ausführungsform der Aufhängevorrichtung 19 ist detailliert in Fig. 3 gezeigt. Im Betriebszustand der Prozessapparatur 1 ist der haubenartige Filter 11 in seinem unteren Bereich 20 über seinen gesamten Umfang mit dem Filterkorbring 18 des Filterkorbs 3 lösbar verbunden. Als unterer Bereich 20 wird das untere Drittel des Filters 11 definiert. Der untere Bereich 20 kann zusätzlich aus einem stabilisierten Material bestehen, sodass der Filter 11 einen stabilisierten Abschluss 21 aufweist. Der stabilisierte Abschluss 21 sollte jedoch eine gewisse Flexibilität aufweisen, damit dieser, wie der gesamte Filter 11, waschbar ist. Bevorzugt ist die Verbindung 22 zwischen dem Filter 11 und dem Filterkorbring 18 des Filterkorbs 3 eine Klips- oder Reißverschlussverbindung. Besonders bevorzugt ist die Verbindung 22 zwischen dem haubenartigen Filter 11 über seinen gesamten Umfang mit dem Filterkorbring 18 des Filterkorbs 3 zumindest im Wesentlichen staubdicht. Im Wesentlichen staubdicht ist hierbei definiert als undurchlässig für Partikel mit einer durchschnittlichen Partikelgröße größer oder gleich der durchschnittlichen Größe der Filterporen bzw. Filteröffnungen des in der Filtervorrichtung 2 angeordneten Filters 11.

Des Weiteren umfasst die Filtervorrichtung 2 einen Dichtmechanismus 23 mit einem im unteren Bereich 24 des Filtergehäuses 4 an diesem angeordneten Dichtelement 25, insbesondere einem aufblasbaren Dichtelement 25. Als unterer Bereich 24 wird das untere Drittel des Filtergehäuses 4 definiert. Das Dichtelement 25 wirkt im Betriebszustand der Prozessapparatur 1 mit dem Filtergehäuse 4, dem Filterkorbring 18 und der Prozessapparatur 1, insbesondere dem Flansch 10 der Prozessapparatur 1, derart zusammen, dass zwischen dem Filtergehäuse 4, dem Filterkorbring 18 und der Prozessapparatur 1 eine Dichtung erzeugbar ist oder erzeugt wird, sodass mittels des Dichtmechanismus 23 und des Filters 11 das Filtergehäuse 4 in einen die zu behandelnden Partikel umfassenden zweiten Teil 8b der Prozesskammer 8 und eine die entstaubte Prozessluft aufnehmende Reinluftkammer 26 unterteilt ist.

Im Ausführungsbeispiel ist im Bereich des dritten vertikalen Filtergehäuseabschnitts 6c zwischen einer Filtergehäusewand 16c des Filtergehäuseabschnitts 6c und dem Filterkorb 3, d. h. in der Reinluftkammer 26, eine Ausblasvorrichtung 27 angeordnet. Die Ausblasvorrichtung 27 ist in Form von vier als Druckluftleitung ausgeführten Rohren 28 ausgebildet, die über einen Einlass 29 in die Reinluftkammer 26 geführt werden. Die als Druckluftleitung ausgeführten Rohre 28 sind mit einer hier nicht dargestellten Druckluftversorgung verbunden, die bevorzugt außerhalb der Filtervorrichtung 2 angeordnet ist.

Im Halbschnitt der Fig. 1 sind zwei mit einem Blindstopfen am Ende verschlossene Rohre 28a und 28b dargestellt, die den am Filterkorb 3 angeordneten Filter 11 zumindest im Wesentlichen um 90° umschließen (Rohr 28a) bzw. zumindest im Wesentlichen um 180° umschließen (Rohr 28b). Jedes Rohr 28 weist zumindest eine Düse 30 auf, sodass über die Ausblasvorrichtung 27 die Außenseite des Filters 11 mit Blasluft beaufschlagbar ist. Die Beaufschlagung der Außenseite des Filters 11 mit Blasluft mittels der an den Rohren 28 angeordneten Düsen 30 wird vorzugsweise entsprechend einer vordefinierten Taktung durchgeführt. Hierdurch ist es möglich den Filter 11 abzureinigen, d.h. die zu behandelnden Partikel von der inneren Oberfläche des haubenartigen Filters 11 abzulösen und der Prozesskammer 8 zur weiteren Behandlung zurückzuführen, sodass eine Verlängerung der Behandlungszeit bis hin zur kontinuierlichen Behandlung der Partikel erreichbar ist. Für eine diesbezüglich verbesserte Abreinigung des Filters 11 kann zum einen der Filter 11 selbst hier nicht dargestellte Versteifungselemente, wie stabilisierte Nähte oder dgl. aufweisen, um den Filter 11 in Filtersegmente zu unterteilen oder zum anderen können bspw. hier ebenfalls nicht gezeigte Stege im Filtergehäuse 4 angeordnet, die die Reinluftkammer 26 des Filtergehäuses 4 in Ausblasbereiche segmentieren. Die im Filtergehäuse 4 angeordneten Stege führen die Ausblasluft gezielt auf vorbestimmte Bereiche des Filters 11, insbesondere bspw. auf die Filtersegmente, und verhindern dadurch in verbesserter Weise eine unzureichende Abreinigung des in der Filtervorrichtung 2 angeordneten Filters 11. Die beiden hier nicht dargestellten Rohre 28c und 28d umschließen den haubenartigen Filter 11 in gleicher Weise wie die Rohre 28a und 28b, jedoch vom Einlass 29 aus gesehen in die entgegengesetzte Richtung des Filters 11.

Die von den Partikeln des zu behandelnden Gutes durch den Filter 11 entstaubte Prozessluft zirkuliert in der Reinluftkammer 26 und wird im Ausführungsbeispiel der Fig. 1 über eine Abluftöffnung 31 für die entstaubte Prozessluft aus der Filtervorrichtung 2 ausgeschleust.

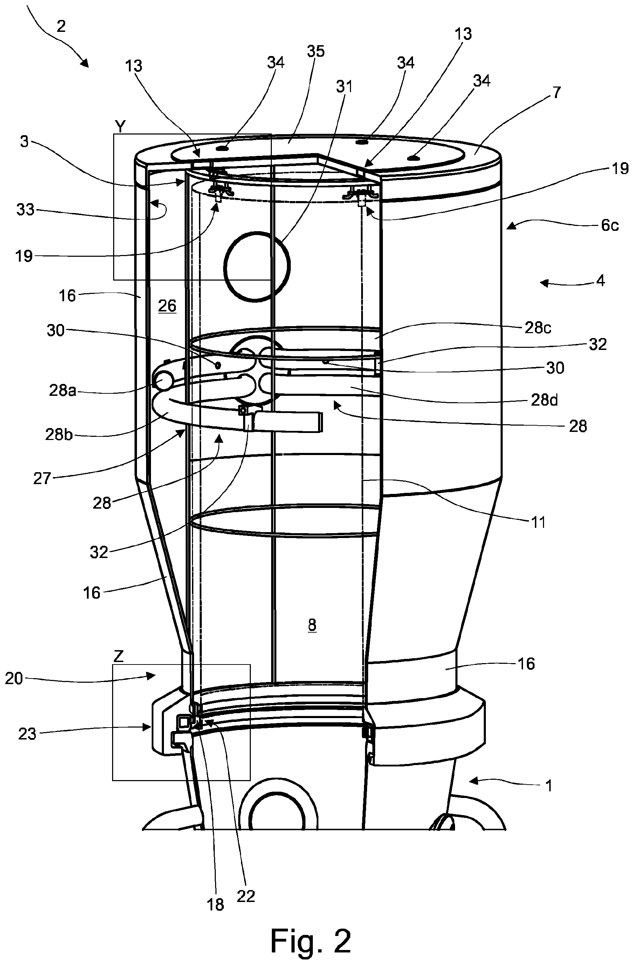

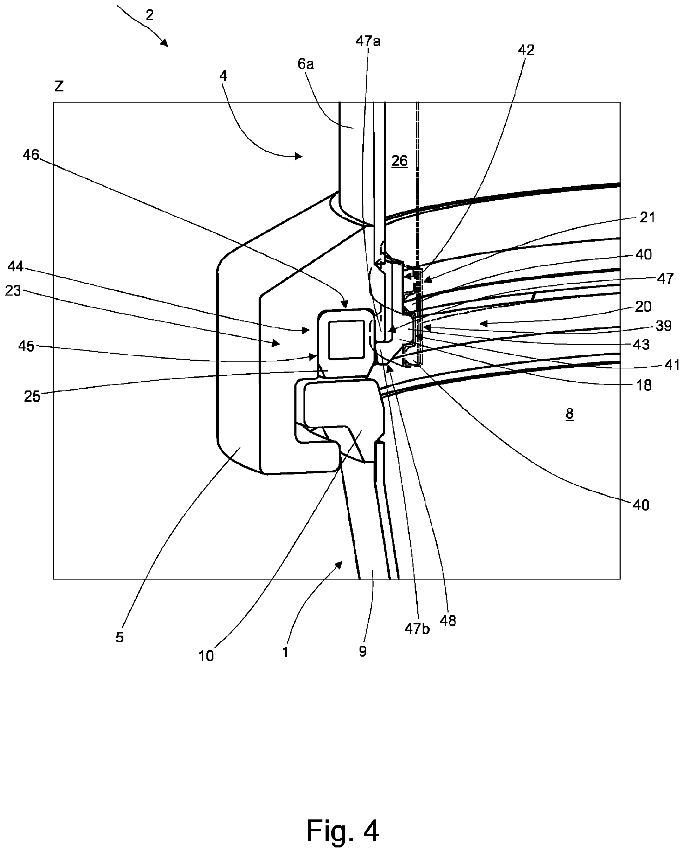

Fig. 2 stellt eine perspektivische Darstellung der in Fig. 1 gezeigten an einer Prozessapparatur 1, bevorzugt einem Granulier- oder Fluidisierungsapparat, besonders bevorzugt einer Wirbelschichtanlage, angeordneten erfindungsgemäßen Filtervorrichtung 2 im Teilschnitt dar. Die Befestigungsvorrichtung 13 für die Befestigung des Filterkorbs 3 am Filtergehäuse 4 sowie eine exemplarische Aufhängung des Filters 11 am Filterkorb 3 mittels der Aufhängevorrichtung 19 gemäß Ausschnitt Y ist in Fig. 3 vergrößert dargestellt und näher erläutert. Der Dichtmechanismus 23 der erfindungsgemäßen Filtervorrichtung 2 zwischen Filtergehäuse 4, Filterkorbring 18 und Prozessapparatur 1 gemäß Ausschnitt Z ist in Fig. 4 vergrößert dargestellt und näher erläutert.

Im in Fig. 2 gezeigten Ausführungsbeispiel ist, wie bereits in Fig. 1 beschrieben, im Bereich des dritten vertikalen Filtergehäuseabschnitts 6c in der Reinluftkammer 26, die in Form von vier Rohren 28 ausgebildete Düsen 30 aufweisende Ausblasvorrichtung 27 angeordnet. Die beiden oberen Rohre 28a und 28c umschließen den am Filterkorb 3 angeordneten Filter 11 in entgegengesetzten Richtungen zumindest im Wesentlichen um 90°. Im Gegensatz hierzu umschließen die beiden unteren Rohre 28b und 28d den Filter 11 in entgegengesetzten Richtungen zumindest im Wesentlichen um 180°. Die Rohre 28 können mittels Halterungen 32 an der Innenwandung 33 der Filtergehäusewand 16 angeordnet bzw. positioniert werden. Über die Abluftöffnung 31 wird die entstaubte Prozessluft aus der Reinluftkammer 26 abgeführt.

Der Filtergehäusedeckel 7 weist zusätzlich einen durch Verbindungselemente 34, insbesondere Schrauben oder dgl., am Filtergehäusedeckel 7 gesicherten und mit diesem lösbar verbundenen Deckelabschnitt 35 auf. Der Deckelabschnitt 35 dient als Zugang zu den Befestigungsvorrichtungen 13 im Filtergehäusedeckel 7 des Filtergehäuses 4 der erfindungsgemäßen Filtervorrichtung 2.

Des Weiteren ist in Fig. 2 dargestellt, dass der Filterkorb 3 einen Filterkorbring 18 aufweist und im Betriebszustand der Prozessapparatur 1 der Filter 11 in seinem unteren Bereich 20 über seinen gesamten Umfang mit dem Filterkorbring 18 des Filterkorbs 3 mittels einer Verbindung 22, insbesondere einer Klips- oder einer Reißverschlussverbindung, verbunden ist. Eine Detailansicht einer exemplarischen Befestigungsvorrichtung 13 des Filterkorbs 3 am Filtergehäuse 4 der Filtervorrichtung 2 und einer exemplarischen Aufhängevorrichtung 19 des Filters 11 am Filterkorb 3 gemäß dem in Fig. 2 dargestellten Ausschnitt Y ist in Fig. 3 gezeigt. Im Filtergehäusedeckel 7 des Filtergehäuses 4 sind im Ausführungsbeispiel in einer dafür vorgesehenen Aussparung 36 Befestigungselemente 12, bevorzugt Magnete, angeordnet. Die Befestigungselemente 12 werden durch den lösbar mit dem Filtergehäusedeckel 7 mittels Verbindungelementen 34 verbundenen Deckelabschnitt 35 gesichert. Die Befestigungselemente 12 wirken mit dem im Ausführungsbeispiel metallischen Filterkorb 3 derart zusammen, dass der Filterkorb 3 im Filtergehäuse 4 sicher angeordnet und direkt mit diesem verbunden ist. Andere Befestigungselemente 12, wie Schrauben oder dergleichen, sind ebenfalls zur Befestigung des Filterkorb 3 im Filtergehäuse 4 denkbar.

Der aus flexiblen, textilen Gewebe bestehende, haubenartige Filter 11 ist mittels der Aufhängevorrichtung 19 mit dem Filterkorb 3 direkt und somit indirekt mit dem Filtergehäuse 4 verbunden. Hierbei umfasst die Aufhängevorrichtung 19 am Filterkorb 3 angeordnete, voneinander abgewandte, gebogene Stifte 37 sowie am Filter 11 angeordnete eine elastischen Ring 38 aufweisende Schlaufen 39. Andere Ausgestaltungen der Aufhängevorrichtung 19 sind denkbar. Zum Aufhängen des haubenartigen Filters 11 wird der an der Schlaufe 39 angeordnete elastische Ring 38, insbesondere ein Gummiring, über die am Filterkorb 3 angeordneten, voneinander abgewandten, gebogenen Stifte 37 gespannt. Hierdurch ist der Filter 11 sehr schnell vom Filterkorb 3 abnehmbar, wodurch ein schnelles Austauschen bzw. Wechseln des haubenartigen Filters 11 möglich wird und dennoch sicher am Filterkorb angeordnet.

In Fig. 4 ist eine Detailansicht des Dichtmechanismus 23 mit aufblasbarem Dichtelement 25 der erfindungsgemäßen Filtervorrichtung 2 zwischen Filtergehäuse 4, Filterkorbring 18 und Prozessapparatur 1 gemäß dem in Fig. 2 gezeigten Ausschnitt Z einer sich nicht im Betriebszustand befindenden Prozessapparatur 1, d. h. mit einem nicht aufgeblasenen Dichtelement 25, dargestellt. Das den ersten vertikalen Filtergehäuseabschnitt 6a und eine Zarge 5, insbesondere eine C-Zarge, aufweisende Filtergehäuse 4 ist mit der Prozessapparatur 1 über einen zur Prozessapparatur 1 gehörenden Flansch 10, der an die Prozessapparaturwand 9 anschließt, verbunden. Hierzu greift der Flansch 10 in die in einer C-Form ausgebildete Zarge 5 ein.

Der haubenartige Filter 11 weist in seinem unteren Bereich 20 um seinen gesamten Umfang einen stabilisierten Abschluss 21 auf. Dieser umfasst einen plattenähnlichen Grundkörper 39 und auf diesem angeordnete stegähnliche Erhebungen 40, sodass sich im Querschnitt des stabilisierten Abschlusses 21 ein U-förmiges Profil 41 ergibt. Der plattenähnliche Grundkörper 39 und die stegähnlichen Erhebungen 40 bilden einen ersten Teil der Verbindung 22, insbesondere einer Klips- oder Reißverschlussverbindung.

Der Filterkorbring 18 des Filterkorbs 3 weist in seinem unteren Bereich 17 auf der dem Filter 11 zugewandten Seite 42 eine dem U-förmigen Profil 41 des stabilisierten Abschlusses 21 komplementäre stegähnliche Erhebung 43 auf. Diese bildet einen zweiten Teil der Verbindung 22. Zusammen bilden das U-förmige Profil 41 des stabilisierten Abschlusses 21 und die komplementäre stegähnliche Erhebung 43 die Verbindung 22 aus.

Im Ausführungsbeispiel ist der stabilisierte Abschluss 21 des haubenartigen Filters 11 über seinen gesamten Umfang mit dem Filterkorbring 18 des Filterkorbs 3 mittels der dargestellten Verbindung 22 verbunden, vorzugsweise ist die Verbindung 22 staubdicht, sodass keine Partikel des zu behandelnden Gutes von der Prozesskammer 8 in die Reinluftkammer 26 gelangen können.

Der das in einer Nut 44 angeordnete Dichtelement 25 umfassende Dichtmechanismus 23 zur Abdichtung zwischen Prozesskammer 8 und Reinluftkammer 26 ist zumindest teilweise in der Zarge 5 des Filtergehäuses 4 angeordnet. Im Ausführungsbeispiel ist das Dichtelement 25 des Dichtmechanismus 23 als aufblasbares Dichtelement 25 ausgebildet. Die Nut 44 in der das Dichtelement 25 angeordnet ist, ist im Ausführungsbeispiel als geteilte Nut 44 ausgebildet. Die geteilte Nut 44 wird hierbei durch das Filtergehäuse 4, insbesondere durch die Zarge 5, und den Filterkorbring 18 gebildet. Hierbei weist die Zarge 5 des Filtergehäuses 4 eine erste Flanke 45, einen Nutgrund 46 sowie einen ersten Teil 47a einer zweiten Flanke 47 der geteilten Nut 44 und der Filterkorbring 18 einen zweiten Teil 47b der zweiten Flanke 47 der geteilten Nut 44 auf. Der am Filterkorbring 18 ausgebildete zweite Teil 47b der zweiten Flanke 47 der geteilten Nut 44 ist in Form eines um den gesamten Umfang des Filterkorbrings 18 umlaufenden Steg 48 ausgebildet. Durch die Nut 44, insbesondere die geteilte Nut 44, wird das Dichtelement 25 des Dichtmechanismus 23 in seiner Position gehalten bzw. geführt, sodass stets eine optimale Dichtung zwischen den abzudichtenden Bauteilen, Filtergehäuse 4, Filterkorbring 18 und Prozessapparatur 1, erzielt wird. Der Vorteil einer geteilten Nut 44 ist, dass eine verbesserte Dichtung zwischen Filtergehäuse 4 und Filterkorbring 18 in der geteilten Nut 44 durch das dort angeordnete Dichtelement 25 erzielt wird, da die einzelnen Bauteile beim Zusammenbau der Filtervorrichtung 2 immer an der gleichen Position angeordnet sind.

Das Dichtelement 25 dichtet im seinem nicht aufgeblasenen Zustand, d. h. die Prozessapparatur befindet sich nicht im Betrieb, nicht zwischen Prozesskammer 8 und Reinluftkammer 26 ab.

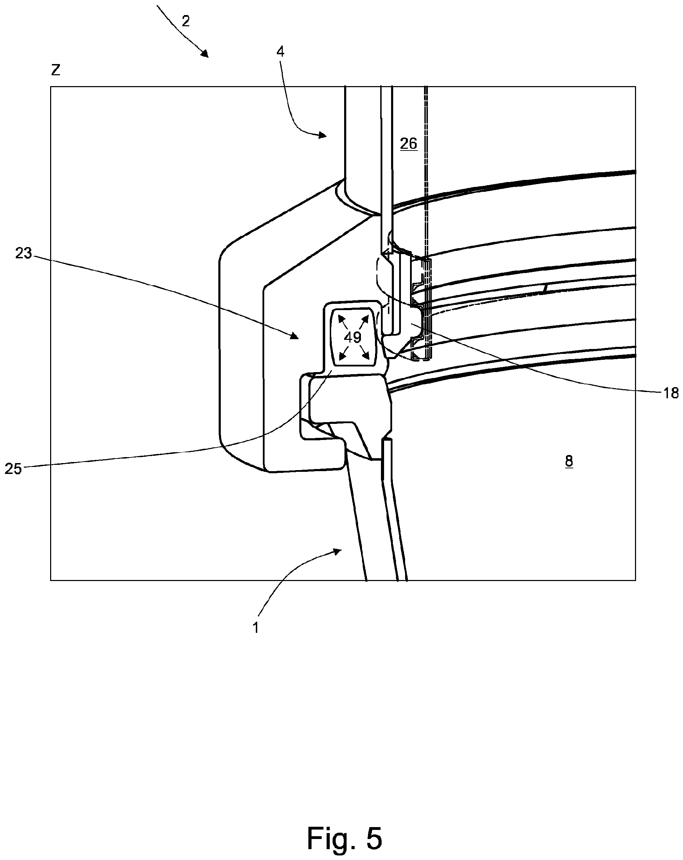

Fig. 5 zeigt eine Detailansicht des Dichtmechanismus 23 mit aufblasbarem Dichtelement 25 der erfindungsgemäßen Filtervorrichtung 2 zwischen Filtergehäuse 4, Filterkorbring 18 und Prozessapparatur 1 gemäß dem in Fig. 2 dargestellten Ausschnitt Z einer sich im Betriebszustand befindenden Prozessapparatur 1, d. h. das Dichtelement 25 ist aufgeblasen. Durch den im Filtergehäuse 4 angeordneten Filterkorb 3 und insbesondere dessen Filterkorbring 18 bildet sich die geteilte Nut 44 aus. Der Gasdruck innerhalb des Dichtelements 25 wirkt in Richtung der dargestellten Pfeile 49 auf das durch die geteilte Nut 44 in seiner Ausdehnung zumindest teilweise geführte Dichtelement 25, sodass dieses die die Filtervorrichtung 2 gegenüber der Prozessapparatur 1 dergestalt abdichtet, dass das Filtergehäuse 4 in eine Prozesskammer 8 und eine Reinluftkammer 26 unterteilt ist.

Die geteilte Nut 44 hat hierbei eine Doppelfunktion, nämlich, wie vorab dargestellt, zum einen eine Abdichtung zwischen dem Filtergehäuse 4 und der Prozessapparatur 1 und zum anderen eine Abdichtung zwischen dem Filtergehäuse 4 und dem Filterkorbring 18 zu gewährleisten.

Gleichzeitig wird durch die erfindungsgemäße Filtervorrichtung 2 im Vergleich gegenüber herkömmlichen Filtervorrichtungen sichergestellt, dass der aus einem flexiblen, textilen Gewebe bestehende, haubenartige Filter 11 sehr einfach und schnell austauschbar ist, sodass ein auf der Prozessapparatur 1 durchgeführter Herstellungs- und/oder Coatingprozess, insbesondere für Partikel, lediglich für eine kurze Zeit zu unterbrechen ist. Hierdurch wird die Produktionskapazität der Anlage gesteigert. Darüber hinaus wird durch die einfache und schnelle Möglichkeit eines Austauschs oder Wechsels des Filters 11 ein Wechsel hin zu einem Herstellungs- und/oder Coatingprozess auf ein anderes Produkt auf der Prozessapparatur 1 optimiert.

## Patentansprüche

1. An einer Prozessapparatur (1), insbesondere einem Granulier- oder Fluidisierungsapparat, anordenbare Filtervorrichtung (2) zum Entstauben von Prozessluft der Prozessapparatur (1), mit einem einen Filterkorb (3) umfassenden Filtergehäuse (4), **dadurch gekennzeichnet, dass** der Filterkorb (3) einen aus einem flexiblen, textilen Gewebe bestehenden, haubenartigen Filter (11) aufweist, der für Prozessluft durchlässig ist, die zu behandelnden Partikel des Gutes jedoch zurückbehält, und wobei der Filterkorb (3) zwischen dem Filtergehäuse (4) und dem Filter (11) angeordnet ist und der Filterkorb (3) und der Filter (11) direkt oder indirekt am Filtergehäuse (4) befestigbar oder befestigt sind, wobei der Filterkorb (3) einen Filterkorbring (18) aufweist und im Betriebszustand der Prozessapparatur (1) der Filter (11) in seinem unteren Bereich (20) über seinen gesamten Umfang mit dem Filterkorbring (18) des Filterkorbs (3) im Wesentlichen staubdicht verbunden ist und, dass die Filtervorrichtung (2) einen Dichtmechanismus (23) mit einem im unteren Bereich (24) des Filtergehäuses (4) an diesem angeordneten Dichtelement (25) umfasst, wobei das Dichtelement (25) im Betriebszustand der Prozessapparatur (1) mit dem Filtergehäuse (4), dem Filterkorbring (18) und der Prozessapparatur (1) derart zusammenwirkt, dass zwischen dem Filtergehäuse (4), dem Filterkorbring (18) und der Prozessapparatur (1) eine Dichtung erzeugbar ist oder erzeugt wird, sodass mittels des Dichtmechanismus (23) und des Filters (11) das Filtergehäuse (4) in eine die zu behandelnden Partikel umfassende Prozesskammer (8) und eine die entstaubte Prozessluft aufnehmende Reinluftkammer (26) unterteilt ist.

2. Filtervorrichtung (2) nach Anspruch 1, **dadurch gekennzeichnet, dass** das Dichtelement (25) in einer Nut (44) angeordnet ist.

3. Filtervorrichtung (2) nach Anspruch 2, **dadurch gekennzeichnet, dass** die Nut (44) eine geteilte Nut (44) ist.

4. Filtervorrichtung (2) nach Anspruch 3, **dadurch gekennzeichnet, dass** die geteilte Nut (44) durch das Filtergehäuse (4) und den Filterkorbring (18) ausgebildet wird.

5. Filtervorrichtung (2) nach Anspruch 4, **dadurch gekennzeichnet, dass** das Filtergehäuse (4) eine erste Flanke (45), einen Nutgrund (46) sowie einen ersten Teil (47a) einer zweiten Flanke (47) der geteilten Nut (44) und der Filterkorbring (18) einen zweiten Teil (47b) der zweiten Flanke (47) der geteilten Nut (44) aufweist.

6. Filtervorrichtung (2) nach einem der vorhergehenden Ansprüche, **dadurch gekennzeichnet, dass** der Filterkorbring (18) des Filterkorbs (3) zumindest im Wesentlichen in Form einer Platte ausgebildet ist.

7. Filtervorrichtung (2) nach einem der vorhergehenden Ansprüche, **dadurch gekennzeichnet, dass** das Dichtelement (25) im Bereich einer Zarge (5) im unteren Bereich (24) des Filtergehäuses (4) angeordnet ist.

8. Filtervorrichtung (2) nach einem der vorhergehenden Ansprüche, **dadurch gekennzeichnet, dass** das Dichtelement (25) des Dichtmechanismus (23) als aufblasbares Dichtelement (25) ausgebildet ist.

9. Filtervorrichtung (2) nach Anspruch 8, **dadurch gekennzeichnet, dass** die Dichtung durch Aufblasen des Dichtelements (25) erzeugbar ist oder erzeugt wird.

10. Filtervorrichtung (2) nach einem der vorhergehenden Ansprüche, **dadurch gekennzeichnet, dass** der Filter (11) in seinem unteren Bereich (20) über seinen gesamten Umfang mit dem Filterkorbring (18) des Filterkorbs (3) lösbar verbunden ist, wobei zweckmäßigerweise die Verbindung (22) zwischen dem Filter (22) in seinem unteren Bereich (20) über seinen gesamten Umfang mit dem Filterkorbring (18) des Filterkorbs (3) eine Klips- oder Reißverschlussverbindung ist.

11. Filtervorrichtung (2) nach Anspruch 10, **dadurch gekennzeichnet, dass** die Verbindung (22) zwischen dem Filter (11) in seinem unteren Bereich (20) über seinen gesamten Umfang mit dem Filterkorbring (18) des Filterkorbs (18) zumindest im Wesentlichen staubdicht ist.

12. Filtervorrichtung (2) nach einem der vorhergehenden Ansprüche, **dadurch gekennzeichnet, dass** der Filterkorb (3) mittels einer im Filtergehäuse (4) angeordneten, Befestigungselemente (12), insbesondere Magnete, umfassenden Befestigungsvorrichtung (13) am Filtergehäuse (4) befestigbar oder befestigt ist.

13. Filtervorrichtung (2) nach einem der vorhergehenden Ansprüche, **dadurch gekennzeichnet, dass** der Filter (11) mittels einer Aufhängevorrichtung (19) am Filtergehäuse (4) oder am Filterkorb (3) befestigbar oder befestigt ist.

14. Filtervorrichtung (2) nach einem der vorhergehenden Ansprüche, **dadurch gekennzeichnet, dass** die Filtervorrichtung (2) eine eine Düse (30) umfassende Ausblasvorrichtung (27) aufweist, über die die Außenseite des Filters (11) mit Blasluft beaufschlagbar ist.

15. Filtervorrichtung (2) nach einen der vorhergehenden Ansprüche, **dadurch gekennzeichnet, dass** Stege im Filtergehäuse (4) angeordnet sind, die das Filtergehäuse (4) in Ausblasbereiche segmentieren.

## Claims

1. Filter device (2) locatable at a process apparatus (1), in particular a granulating or fluidising apparatus, for removing dust from process air of the process apparatus (1), with a filter housing (4) comprising a filter basket (3), **characterised in that** the filter basket (3) has a hood-like filter (11) consisting of a flexible textile fabric, which is permeable to process air but retains the material particles to be treated, wherein the filter basket (3) is located between the filter housing (4) and the filter (11) and the filter basket (3) and the filter (11) can be or are directly or indirectly fastened to the filter housing (4), wherein the filter basket (3) has a filter basket ring (18) and the filter (11) is in the operative state of the process apparatus (1) connected in its lower region (20) along its entire circumference to the filter basket ring (18) of the filter basket (3) in a substantially dust-proof manner, and **in that** the filter device (2) comprises a sealing mechanism (23) with a sealing element (25) located in the lower region (24) of the filter housing (4) thereon, wherein the sealing element (25) interacts in the operative state of the process apparatus (1) with the filter housing (4), the filter basket ring (18) and the process apparatus (1) in such a way that a seal can be or is created between the filter housing (4), the filter basket ring (18) and the process apparatus (1), so that the filter housing (4) is divided into a process chamber (8) holding the particles to be treated and a clean air chamber (26) receiving the dust-free process air by means of the sealing mechanism (23) and the filter (11).

2. Filter device (2) according to claim 1, **characterised in that** the sealing element (25) is located in a groove (44).

3. Filter device (2) according to claim 2, **characterised in that** the groove (44) is a divided groove (44).

4. Filter device (2) according to claim 3, **characterised in that** the divided groove (44) is formed by the filter housing (4) and the filter basket ring (18).

5. Filter device (2) according to claim 4, **characterised in that** the filter housing (4) has a first side (45), a groove base (46) and a first part (47a) of a second side (47) of the divided groove (44) and the filter basket ring (18) has a second part (47b) of the second side (47) of the divided groove (44).

6. Filter device (2) according to any of the preceding claims, **characterised in that** the filter basket ring (18) of the filter basket (3) is at least substantially designed in the form of a plate.

7. Filter device (2) according to any of the preceding claims, **characterised in that** the sealing element (25) is located in the region of a frame (5) in the lower region (24) of the filter housing (4).

8. Filter device (2) according to any of the preceding claims, **characterised in that** the sealing element (25) of the sealing mechanism (23) is designed as an inflatable sealing element (25).

9. Filter device (2) according to claim 8, **characterised in that** the seal can be or is created by inflating the sealing element (25).

10. Filter device (2) according to any of the preceding claims, **characterised in that** the filter (11) is releasably connected along its entire circumference to the filter basket ring (18) of the filter basket (3) in its lower region (20), wherein the connection between the filter (11) in its lower region (20) along its entire circumference and the filter basket ring (18) of the filter basket (3) expediently is a clips or frictional connection.

11. Filter device (2) according to claim 10, **characterised in that** the connection between the filter (11) in its lower region (20) along its entire circumference and the filter basket ring (18) of the filter basket (3) is at least substantially dust-proof.

12. Filter device (2) according to any of the preceding claims, **characterised in that** the filter basket (3) can be or is fastened to the filter housing (4) by means of a fastening device (13) located in the filter housing (4) and comprising fastening elements (12), in particular magnets.

13. Filter device (2) according to any of the preceding claims, **characterised in that** the filter (11) can be or is fastened to the filter housing (4) or to the filter basket (3) by means of a suspension device (19).

14. Filter device (2) according to any of the preceding claims, **characterised in that** the filter device (2) has blow-out device (27), which comprises a nozzle (30) and can be supplied with blowing air via the outside of the filter (11).

15. Filter device (2) according to any of the preceding claims, **characterised in that** webs segmenting the filter housing (4) into blow-out regions are located in the filter housing (4).

## Revendications

1. Dispositif filtrant (2) pouvant être agencé au niveau d'un appareil de traitement (1), en particulier d'un appareil de granulation ou de fluidisation pour le dépoussiérage d'air de traitement de l'appareil de traitement (1), avec un boîtier de filtre (4) comprenant un panier de filtre (3), **caractérisé en ce que** le panier de filtre (3) présente un filtre (11) de type capot, se composant d'un tissu textile flexible qui est perméable pour de l'air de traitement qui retient toutefois des particules à traiter du produit, et dans lequel le panier de filtre (3) est agencé entre le boîtier de filtre (4) et le filtre (11) et le panier de filtre (3) et le filtre (11) sont ou peuvent être fixés directement ou indirectement au boîtier de filtre (4), dans lequel le panier de filtre (3) présente un anneau de panier de filtre (18) et dans l'état de fonctionnement de l'appareil de traitement (1), le filtre (11) est relié de manière sensiblement étanche à la poussière dans sa zone (20) inférieure sur sa périphérie entière à l'anneau de panier de filtre (18) du panier de filtre (3) et, que le dispositif filtrant (2) comporte un mécanisme étanche (23) avec un élément étanche (25) agencé dans la zone inférieure (24) du boîtier de filtre (4) au niveau de celui-ci, dans lequel l'élément étanche (25) coopère dans l'état de fonctionnement de l'appareil de traitement (1) avec le boîtier de filtre (4), l'anneau de panier de filtre (18) et l'appareil de traitement (1) de telle manière qu'entre le boîtier de filtre (4), l'anneau de panier de filtre (18) et l'appareil de traitement (1), une garniture étanche soit ou puisse être générée de sorte qu'au moyen du mécanisme étanche (23) et du filtre (11), le boîtier de filtre (4) soit divisé en une chambre de traitement (8) comprenant les particules à traiter et une chambre d'air pur (26) recevant l'air de traitement dépoussiéré.

2. Dispositif filtrant (2) selon la revendication 1, **caractérisé en ce que** l'élément étanche (25) est agencé dans une rainure (44).

3. Dispositif filtrant (2) selon la revendication 2, **caractérisé en ce que** la rainure (44) est une rainure divisée (44).

4. Dispositif filtrant (2) selon la revendication 3, **caractérisé en ce que** la rainure divisée (44) est réalisée par le boîtier de filtre (4) et l'anneau de panier de filtre (18).

5. Dispositif filtrant (2) selon la revendication 4, **caractérisé en ce que** le boîtier de filtre (4) présente un premier flanc (45), un fond de rainure (46) ainsi qu'une première partie (47a) d'un deuxième flanc (47) de la rainure divisée (44) et l'anneau de panier de filtre (18) présente une deuxième partie (47b) du deuxième flanc (47) de la rainure divisée (44).

6. Dispositif filtrant (2) selon l'une quelconque des revendications précédentes, **caractérisé en ce que** l'anneau de panier de filtre (18) du panier de filtre (3) est au moins sensiblement en forme de plaque.

7. Dispositif filtrant (2) selon l'une quelconque des revendications précédentes, **caractérisé en ce que** l'élément étanche (25) est agencé dans la zone d'un cadre (5) dans la zone inférieure (24) du boîtier de filtre (4).

8. Dispositif filtrant (2) selon l'une quelconque des revendications précédentes, **caractérisé en ce que** l'élément étanche (25) du mécanisme étanche (23) est réalisé en tant qu'élément étanche (25) gonflable.

9. Dispositif filtrant (2) selon la revendication 8, **caractérisé en ce que** la garniture étanche est ou peut être générée par gonflage de l'élément étanche (25).

10. Dispositif filtrant (2) selon l'une quelconque des revendications précédentes, **caractérisé en ce que** le filtre (11) est relié de manière amovible dans sa zone inférieure (20) sur sa périphérie entière à l'anneau de panier de filtre (18) du panier de filtre (3), dans lequel de manière appropriée, la liaison (22) entre le filtre (22) dans sa zone inférieure (20) est une liaison de fermeture à clips ou à glissière avec l'anneau de panier de filtre (18) du panier de filtre (3).

11. Dispositif filtrant (2) selon la revendication 10, **caractérisé en ce que** la liaison (22) entre le filtre (11) dans sa zone inférieure (20) sur sa périphérie entière avec l'anneau de panier de filtre (18) du panier de filtre (18) est au moins sensiblement étanche à la poussière.

12. Dispositif filtrant (2) selon l'une quelconque des revendications précédentes, **caractérisé en ce que** le panier de filtre (3) est ou peut être fixé au moyen d'un dispositif de fixation (13) agencé dans le boîtier de filtre (4), comportant des éléments de fixation (12), en particulier des aimants au boîtier de filtre (4).

13. Dispositif filtrant (2) selon l'une quelconque des revendications précédentes, **caractérisé en ce que** le filtre (11) est ou peut être fixé au boîtier de filtre (4) ou au panier de filtre (3) au moyen d'un dispositif de suspension (19).

14. Dispositif filtrant (2) selon l'une quelconque des revendications précédentes, **caractérisé en ce que** le dispositif filtrant (2) présente un dispositif de gonflage (27) comportant une buse (30), par le biais duquel le côté extérieur du filtre (11) peut être alimenté en air de gonflage.

15. Dispositif filtrant (2) selon l'une quelconque des revendications précédentes, **caractérisé en ce que** des nervures sont agencées dans le boîtier de filtre (4), lesquelles segmentent le boîtier de filtre (4) en zones de gonflage.
